(19) Europäisches Patentamt
European Patent Office
Office européen des brevets

(11) **EP 2 431 712 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(51) Int Cl.:
*G01C 22/00* (2006.01)  *G07B 15/02* (2011.01)
*G07B 15/06* (2011.01)

(21) Anmeldenummer: **10450146.5**

(22) Anmeldetag: **17.09.2010**

(54) **Verfahren zum Ermitteln der Länge des von einem Fahrzeug zurückgelegten Wegs**

Method for calculating the distance travelled by a vehicle

Procédé de détermination de la longueur de la trajectoire effectuée par un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**21.03.2012 Patentblatt 2012/12**

(73) Patentinhaber: **Kapsch TrafficCom AG**
**1120 Wien (AT)**

(72) Erfinder:
• **Kaes, Katharina**
  **1140 Wien (AT)**
• **Tijink, Jasja**
  **2384 Breitenfurt (AT)**
• **Nagy, Oliver**
  **1190 Wien (AT)**

(74) Vertreter: **Weiser, Andreas**
**Patentanwalt**
**Kopfgasse 7**
**1130 Wien (AT)**

(56) Entgegenhaltungen:
**EP-A1- 0 789 225       EP-A1- 1 736 932
EP-A1- 2 431 712       EP-A2- 1 471 329
DE-A1-102004 030 709   DE-A1-102006 027 676
DE-T2- 69 623 069**

**Beschreibung**

Die vorliegende Erfindung betrifft ein Verfahren zum Ermitteln der Länge des von einem Fahrzeug zurückgelegten Wegs unter Verwendung einer Positionen des Fahrzeugs aufzeichnenden Positionsmesseinrichtung und einer digitalen Straßenkarte, die sich aus Straßensegmenten bekannter Segmentlängen zusammensetzt, mit den Schritten

Aufzeichnen von Positionen des Fahrzeugs auf dem Weg mittels der Positionsmesseinrichtung,

Zuordnen der aufgezeichneten Fahrzeugpositionen zu einer Aufeinanderfolge von Straßensegmenten, und

Ermitteln der Weglänge aus den Segmentlängen dieser Straßensegmente.

Ein derartiges Verfahren ist beispielsweise gemäß dem Oberbegriff des Anspruchs 1 aus der DE 10 2006 027676 A1 bekannt.

Aus der EP 1 471 329 A2 ist ein Optimalpfad-Suchverfahren zur Navigation in einem Straßennetz bekannt, wobei für Abbiegungen in den zu untersuchenden Pfaden Gewichtungsfaktoren eingeführt werden, welche von der Schwierigkeit, unter realen Straßensituationen dort abzubiegen, abhängen, z.B. vom Abbiegewinkel und der Breitenrelation der beteiligten Straßen.

Die Messung der von einem Fahrzeug zurückgelegten Strecke bzw. Weglänge ist eine der Mautberechnungsgrundlagen moderner Straßenmautsysteme, die auf digitalem Kartenmaterial beruhen. Dazu werden beispielsweise durch Satellitennavigation bestimmte Fahrzeugpositionen ("position fixes") mittels "map matching" den Straßensegmenten der digitalen Straßenkarte zugeordnet und aus deren Längen die zurückgelegte Strecke bestimmt. Die Erfindung gründet sich auf die Erkenntnis, dass diese Vorgehensweise mit einer beträchtlichen Ungenauigkeit behaftet ist, weil sie auf idealisierten Annahmen beruht: Die Straßensegmente derzeit verfügbarer digitaler Straßenkarten bilden reale Straßen zwecks Vereinfachung und Reduzierung des Speicheraufwands idealisiert linienförmig ab. Die Segmentlängen der Straßensegmente sind dabei jeweils zwischen den Kreuzungspunkten der realen Straßen definiert.

Die Anmelder haben erkannt, dass sich ein signifikanter Messfehler akkumuliert, wenn ein Fahrzeug nicht diesen idealisierten Kreuzungsmittelpunkten folgt, sondern die reale Straßenbreite ausnützt und insbesondere Innen- bzw. Außenkurven an den Kreuzungsmittelpunkten vorbei nimmt. Die Erfindung schafft erstmals ein Verfahren, welches die Abbildefehler von idealisiertem digitalem Straßenkartenmaterial berücksichtigt und auf Grundlage dieses Straßenkartenmaterials eine genauere Weglängenermittlung ermöglicht als die bekannten Verfahren.

Zu diesem Zweck wird gemäß den Ansprüchen 1-12 für zumindest zwei aufeinanderfolgende Straßensegmente aus dem Winkel zwischen zwei aufeinanderfolgenden Straßensegmenten und einer angenommenen Straßenbreite der beiden Straßensegmente die Länge des Abbiegewegs des Fahrzeugs vom einen Straßensegment in das andere Straßensegment berechnet, um welche Abbiegeweglänge die Weglänge bei ihrer Ermittlung korrigiert wird.

Das erfindungsgemäße Verfahren berechnet ausgehend von idealisiert-linienförmigen Straßensegmenten einer digitalen Straßenkarte ein realistisches Modell des Straßennetzes, indem erstmals reale Abbiegewege an Straßenkreuzungen in die Längenermittlung eingehen. Im Ergebnis kann damit eine wesentlich genauere Bestimmung des von einem Fahrzeug zurückgelegten Wegs erzielt werden als mit den bekannten Verfahren.

Eine besonders vorteilhafte Ausführungsform der Erfindung für digitale Straßenkarten, bei denen zumindest ein Straßensegment eine Straße mit zumindest zwei Fahrspuren repräsentiert, die entgegengesetzten Fahrtrichtungen zugeordnet sind, zeichnet sich dadurch aus, dass bei der Berechnung des Abbiegewegs zu/von diesem Straßensegment der Abbiegeweg zu/von jener Fahrspur berechnet wird, welche der Fahrtrichtung des Fahrzeugs zugeordnet ist. In gleicher Weise zeichnet sich eine weitere bevorzugte Ausführungsform der Erfindung für digitale Straßenkarten, bei denen zumindest ein Straßensegment eine Straße mit zumindest zwei Fahrspuren repräsentiert, von denen zumindest eine einer bestimmten Abbiegerichtung zugeordnet ist, dadurch aus, dass bei der Berechnung des Abbiegewegs zu/von diesem Straßensegment der Abbiegeweg zu/von jener Fahrspur berechnet wird, welche der Abbiegerichtung des Fahrzeugs zugeordnet ist. Beide Varianten berücksichtigen damit nicht nur die gegenseitige Lage der Straßensegmente, sondern zusätzlich auch die Bewegungshistorie ("track") des Fahrzeugs für die Auswahl und Berechnung des zwischen Straßensegmenten anzuwendenden Abbiegewegs. Die Weglängenermittlung kann damit noch genauer gestaltet werden.

In einer weiteren Ausführungsform der Erfindung, die sich durch besonders schnelle Berechnung auszeichnet, kann der Abbiegeweg näherungsweise als Polygon berechnet werden. Alternativ kann der Abbiegeweg auch als Kurvenbogen berechnet werden, was eine noch genauere Näherung der realen Straßenverhältnisse ergibt.

Falls die digitale Straßenkarte Angaben über die Straßenbreite enthält, können diese der Straßenkarte direkt entnommen werden. Bevorzugt wird als Straßenbreite jedoch ein vorgegebener Wert angenommen, so dass das Verfahren auf Grundlage von herkömmlichen Straßenkarten mit linienförmig digitalisierten Straßen durchgeführt werden kann.

Eine weitere besonders bevorzugte Ausführungsform der Erfindung zeichnet sich dadurch aus, daß mögliche Abbiegewege zwischen Straßensegmenten der digitalen Straßenkarte vorberechnet und in einer Tabelle zwischengespeichert werden, aus welcher dann der jeweils zwischen zwei Straßensegmenten zu berücksichtigende Abbiegeweg entnommen wird. Dadurch kann die Verarbeitung des Verfahrens beschleunigt werden.

Weitere Beschleunigungsmöglichkeiten des Verfahrens für z.B. die Echtzeit-Abarbeitung in einer OBU, einem Mautabrechnungsserver oder einem Map-Matching-Server bestehen in einer oder mehreren der folgenden bevorzugten Maßnahmen:

ein Abbiegeweg zwischen zwei Straßensegmenten wird nur dann berechnet und berücksichtigt, wenn der Winkel zwischen diesen einen vorgegebenen Mindestwert übersteigt;
die Abbiegewege im Verlauf des zurückgelegten Wegs werden nur dann berechnet und berücksichtigt, wenn sie eine vorgegebene Mindestanzahl oder ihre Summe einen vorgegebenen Mindestwert übersteigt;
zwischen mehr als zwei aufeinanderfolgenden Straßensegmenten, zwischen denen jeweils annähernd gleich große, jedoch in ihrer Abbiegerichtung abwechselnde Winkel liegen, werden keine Abbiegewege berechnet und berücksichtigt; und/oder
die Abbiegewege werden nur für Straßensegmente in bestimmten Gebieten der digitalen Straßenkarte, bevorzugt nur in Stadtgebieten, berechnet und berücksichtigt.

Die Erfindung wird nachstehend anhand eines in den beigeschlossenen Zeichnungen dargestellten Ausführungsbeispiels näher erläutert. In den Zeichnungen zeigt

Fig. 1 ausschnittsweise ein Straßennetz, das durch eine digitale Straßenkarte modelliert ist und in dem Fahrzeuge beispielhafte Wege zurücklegen; und
Fig. 2 das Verfahren der Erfindung zur Ermittlung der an einer Abbiegung des Straßennetzes von Fig. 1 zurückgelegten Weglängen im Detail.

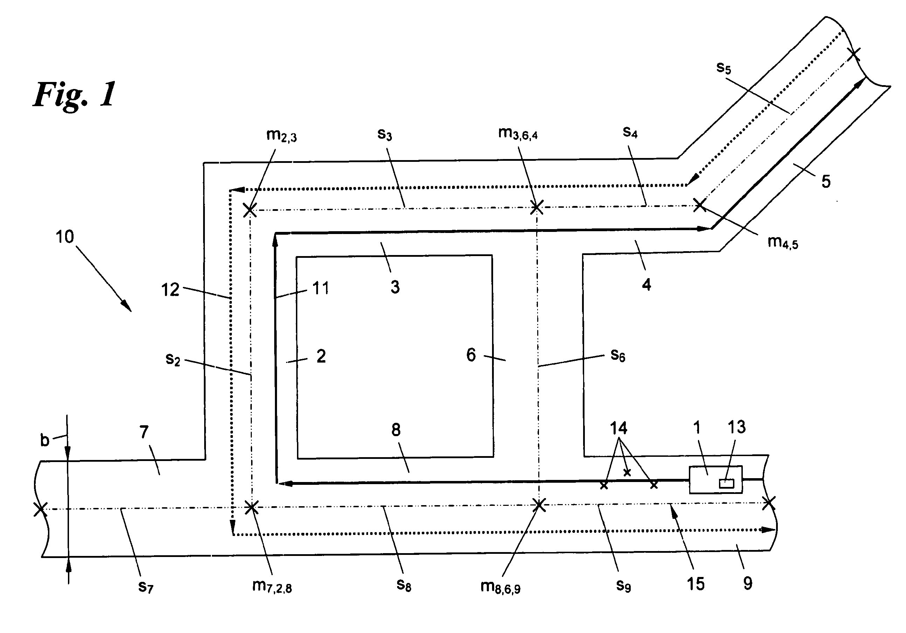

In Fig. 1 ist ein Fahrzeug 1 gezeigt, das sich auf beispielhaften Straßen 2 - 9 eines ausschnittsweise dargestellten Straßennetzes 10 bewegt. Zwei mögliche, vom Fahrzeug 1 im Straßennetz 10 zurücklegbare Wege sind bei 11 mit punktierter Linie und 12 mit fettgedruckter Linie gezeigt.

Das Fahrzeug 1 ist mit einem Fahrzeuggerät ("onboard unit", OBU) 13 ausgestattet, welches seine Position - beispielsweise mit Hilfe von Satellitennavigation oder auf andere bekannte Arten - fortlaufend bestimmt. Drei beispielhafte Fahrzeugpositionen ("position fixes") 14 sind zur Veranschaulichung gezeigt. Die Fahrzeugpositionen 14 werden vom Fahrzeuggerät 13 aufgezeichnet oder von diesem an eine (nicht dargestellte) Zentrale eines Straßenmautsystems zur Aufzeichnung gesendet.

Das Straßennetz 10 ist durch eine digitale Straßenkarte 15 modelliert, die z.B. in der OBU 13, in der genannten Zentrale oder einem Mapmatching-Server des Straßenmautsystems gespeichert ist. Die digitale Straßenkarte 15 umfasst linienförmige Straßensegmente $s_2$ - $s_9$ (siehe strichpunktierte Linien), welche jeweils den Straßen 2 - 9 zugeordnet sind und diese linienförmig idealisiert abbilden. Es versteht sich, daß gekrümmte Straßenverläufe durch eine polygonzugartige Abfolge von Straßensegmenten abgebildet werden können, wie bei den Straßensegmenten $s_4$ und $s_5$ veranschaulicht.

Die Straßensegmente $s_2$ - $s_9$ sind in der digitalen Straßenkarte 15 jeweils zwischen Anschluß- bzw. Kreuzungsmittelpunkten $m_{2,7,8}$, $m_{8,9,6}$, $m_{2,3}$, $m_{3,6,4}$, $m_{4,5}$ usw. der angrenzenden Straßen definiert, d.h. ohne die Breite b der Straßen 2 - 9 zu berücksichtigen. Dadurch weicht die vom Fahrzeug 1 beispielsweise auf dem Weg 11 zurückgelegte Strecke (Weglänge) in der Realität von der bloßen Summe der Segmentlängen der befahrenen Straßensegmente $s_9$, $s_8$, $s_2$, $S_3$, $s_4$ und $s_5$ ab, wie aus Fig. 1 ersichtlich. Genauso verhält es sich bei dem beispielhaften Rückweg 12.

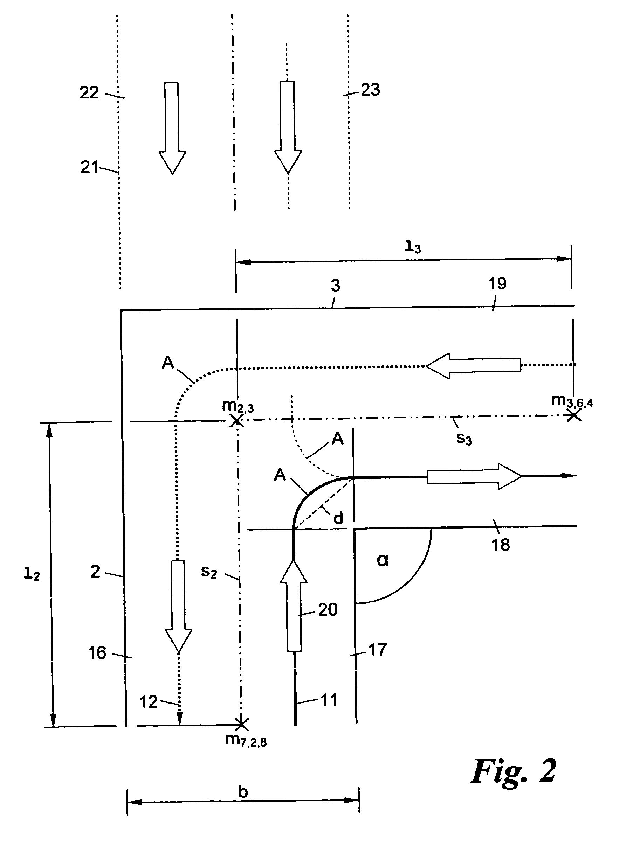

Bei zweispurigen Straßen, wie sie in den Fig. 1 und 2 dargestellt sind, hängt die Abweichung zwischen der Länge des Wegs 11 bzw. 12 und der Länge der Straßensegmente $s_9$, $s_8$, $s_2$, $s_3$, $s_4$ und $s_5$ nicht nur von den Abbiegewegen des Fahrzeugs 1 beim Einbiegen von einem Straßensegment in das nächste ab, sondern auch von der Fahrtrichtung des Fahrzeugs 1, weil einzelne Fahrspuren 16 - 19 der Straßen 2 - 9 bestimmten Fahrtund/oder Abbiegerichtungen 20 zugeordnet sein können. Fig. 2 zeigt dies anhand der beispielhaften Kreuzung $m_{2,3}$ der Straßen 2, 3 und ihren Straßensegmenten $s_2$, $s_3$ im Detail.

Mit:

$l_2$ Segmentlänge des Straßensegmentes $s_2$ der digitalen Straßenkarte 15 für die Straße 2 und
$l_3$ Segmentlänge des Straßensegmentes $s_3$ der digitalen Straßenkarte 15 für die Straße 3,

wäre die aus der digitalen Straßenkarte 15 bestimmte Länge L' des beim Abbiegen von der Straße 2 in die Straße 3 zurückgelegten Wegs

$$L' = l_2 + l_3$$

Unter Berücksichtigung einer angenommenen Breite $b \neq 0$ der Straßen 2, 3, z.B. von 6 m, und eines Winkels $\alpha \neq 0$ zwischen den beiden Straßen 2, 3 bzw. Straßensegmenten $l_2$ und $l_3$ ist die Länge L' um den jeweiligen Abbiegeweg A des Fahrzeugs 1 - z.B. beim Einbiegen von der Straße 2 in die Straße 3 - zu korrigieren, d.h. die tatsächliche bzw. reale Länge L kann angesetzt werden als

$$L_{corr} = l_2 + l_3 + A$$

mit

A Länge des Abbiegewegs als Korrekturterm, d.h. positiv bei kurvenäußeren Fahrbahnen 16, 19 und negativ bei kurveninneren Fahrbahnen 17, 18.

Wird der Abbiegeweg A beispielsweise als Kreisbogen approximiert, haben beide Straßen 2, 3 dieselbe Breite b und beträgt der Winkel $\alpha$ beispielsweise 90°, dann ist der Abbiegeweg A in der "Innenkurve"

$$A = \frac{\pi}{8}b - b$$

und in der "Außenkurve"

$$A = \frac{\pi}{8}b$$

Wenn die Straßen 2, 3 nicht dieselbe vorgegebene Breite b haben, beispielsweise wenn diese der digitalen Straßenkarte 15 für jedes Straßensegment $s_2$, $s_3$ oder für bestimmte Arten von Straßensegmenten wie Fernstraßen, Haupt- und Nebenstraßen gesondert entnommen werden kann, kann der Abbiegeweg A z.B. als Ellipsenbogen approximiert werden. Für die Abbiegewege A können auch andere Arten von Kurvenbogennäherungen, beispielsweise typische Lenkradien von Fahrzeugen, angenommen und berücksichtigt werden.

In vereinfachten Ausführungsformen könnte der Abbiegeweg A auch bloß durch einen Polygonzug angenähert werden, z.B. durch die gezeigte Diagonale d. Der Abbiegeweg A wäre dann bei einem Winkel $\alpha$ = 90° und konstanter Straßenbreite b für die Innenkurve (-) bzw. Außenkurve (+)

$$A = \left( \frac{1 - \sqrt{2}}{2\sqrt{2}} \pm \frac{1}{2} \right) b$$

Für andere Abbiegewinkel $\alpha$ als 90° kann der Abbiegeweg A in analoger Weise durch entsprechende Trigonometrie berechnet werden.

Wie in den Fig. 1 und 2 gezeigt, hängt der Abbiegeweg A insbesondere bei mehrspurigen Straßen, bei denen die Fahrspuren 16 - 19 jeweils einer bestimmten Fahrtrichtung 20 zugeordnet sind, von der jeweiligen Fahrtrichtung 20 des Fahrzeugs 1 ab. In gleicher Weise kann bei Straßen 21 mit mehreren Fahrspuren 22, 23 gleicher Fahrtrichtung, von denen z.B. eine Fahrspur 23 einer bestimmten Abbiegerichtung zugeordnet ist, wie hier die Fahrspur 23 für das Linksabbiegen in die Fahrspur 18, ein entsprechender Abbiegeweg A berücksichtigt werden.

Grundsätzlich ist es auch möglich, alle in einem Straßennetz 10 zwischen Straßen 2 - 9, d.h. Straßensegmenten $s_2$ - $s_9$ der digitalen Straßenkarte 15, möglichen Abbiegewege A vorauszuberechnen und in einer Tabelle einer Datenbank der OBU, des Mautabrechnungsservers und/oder eines Map-Matching-Servers zu speichern. Eine solche Tabelle kann beispielsweise der digitalen Straßenkarte 15 hinzugefügt und sogar mit dieser distribuiert werden. Bei der Ermittlung der Weglänge L können dann anhand der vom Fahrzeug 1 benutzten Straßensegmente $s_2$ - $s_9$ die jeweils zwischen diesen zur Anwendung kommenden Abbiegewege A der vorausberechneten Tabelle entnommen und berücksichtigt werden.

Weitere optionale Möglichkeiten für eine Beschleunigung oder Vereinfachung des Verfahrens in Offline- oder Online-("Echtzeit")-Realisierungen bestehen darin, daß

- ein Abbiegeweg A zwischen zwei Straßensegmenten $s_2$ - $s_9$ nur dann berechnet und berücksichtigt wird, wenn der Winkel $\alpha$ zwischen diesen einen vorgegebenen Mindestwert übersteigt; und/oder
- die Abbiegewege A im Verlauf des zurückgelegten Wegs 11, 12 nur dann berechnet und berücksichtigt werden, wenn sie eine vorgegebene Mindestanzahl oder ihre Summe einen vorgegebenen Mindestwert übersteigt; und/oder
- zwischen mehr als zwei aufeinanderfolgenden Straßensegmenten $s_2$ - $s_9$, zwischen denen jeweils annähernd gleich große, jedoch in ihrer Abbiegerichtung abwechselnde Winkel $\alpha$ liegen, keine Abbiegewege A berechnet und berücksichtigt werden; und/oder
- die Abbiegewege A nur für Straßensegmente $s_2$ - $s_9$ in bestimmten Gebieten der digitalen Straßenkarte 15, bevorzugt nur in Stadtgebieten, berechnet und berücksichtigt werden.

Das geschilderte Verfahren zur Weglängenermittlung lässt sich in jeder geeigneten Verarbeitungsstelle eines Straßenmautsystems anwenden, beispielsweise in OBUs, welche über eigenes gespeichertes Straßenkartenmaterial 15 verfügen und daraus die zurückgelegte Weglänge L ermitteln; oder in zentralen Mautabrechnungsservern, welche rohe Positionsdaten (position fixes oder tracks) von OBUs erhalten und diese einer digitalen Straßenkarte 15 zuordnen ("map matching"); oder in gesonderten Map-matching-Serverfarmen, welche für OBUs oder Mautzentralen das rechenintensive Map-matching durchführen.

Die Erfindung ist demgemäß nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Ermitteln der Länge (L) des von einem Fahrzeug (1) zurückgelegten Wegs (11, 12) unter Verwendung einer Positionen (14) des Fahrzeugs (1) aufzeichnenden Positionsmesseinrichtung (13) und einer digitalen Straßenkarte (15), die sich aus Straßensegmenten ($s_2$ - $s_9$) bekannter Segmentlängen ($l_2$, $l_3$) zusammensetzt, mit den Schritten
Aufzeichnen von Positionen (14) des Fahrzeugs (1) auf dem Weg (11, 12) mittels der Positionsmesseinrichtung (13),
Zuordnen der aufgezeichneten Fahrzeugpositionen (14) zu einer Aufeinanderfolge von Straßensegmenten ($s_2$ - $s_9$), und
Ermitteln der Weglänge (L) aus den Segmentlängen ($l_2$, $l_3$) dieser Straßensegmente ($s_2$ - $s_9$), **dadurch gekennzeichnet,**
**dass** für zumindest zwei aufeinanderfolgende Straßensegmente aus dem Winkel ($\alpha$) zwischen zwei aufeinanderfolgenden Straßensegmenten ($s_2$ - $s_9$) und einer angenommenen Straßenbreite (b) der beiden Straßensegmente ($s_2$ - $s_9$) die Länge des Abbiegewegs (A) des Fahrzeugs (1) vom einen Straßensegment in das andere Straßensegment berechnet wird,
um welche Abbiegeweglänge (A) die Weglänge (L) bei ihrer Ermittlung korrigiert wird.

2. Verfahren nach Anspruch 1, wobei zumindest ein Straßensegment ($s_2$ - $s_9$) der digitalen Straßenkarte (15) eine Straße (2 - 9) mit zumindest zwei Fahrspuren (16 - 19) repräsentiert, die entgegengesetzten Fahrtrichtungen (20) zugeordnet sind, **dadurch gekennzeichnet, dass** bei der Berechnung des Abbiegewegs (A) zu/von diesem Straßensegment ($s_2$ - $s_9$) der Abbiegeweg (A) zu/von jener Fahrspur (16 - 19) berechnet wird, welche der Fahrtrichtung (20) des Fahrzeugs (1) zugeordnet ist.

3. Verfahren nach Anspruch 1 oder 2, wobei zumindest ein Straßensegment ($s_2$ - $s_9$) der digitalen Straßenkarte (15) eine Straße (21) mit zumindest zwei Fahrspuren (22, 23) repräsentiert, von denen zumindest eine (23) einer bestimmten Abbiegerichtung zugeordnet ist, **dadurch gekennzeichnet, dass** bei der Berechnung des Abbiegewegs (A) zu/von diesem Straßensegment ($s_2$ - $s_9$) der Abbiegeweg (A) zu/von jener Fahrspur (23) berechnet wird, welche der Abbiegerichtung des Fahrzeugs (1) zugeordnet ist.

4. Verfahren nach einem der Ansprüche 1 bis 3, **dadurch gekennzeichnet, dass** der Abbiegeweg (A) als Polygonzug berechnet wird.

5. Verfahren nach einem der Ansprüche 1 bis 3, **dadurch gekennzeichnet, dass** der Abbiegeweg (A) als Kurvenbogen berechnet wird.

6. Verfahren nach einem der Ansprüche 1 bis 5, **dadurch gekennzeichnet, dass** die genannte angenommene Straßenbreite (b) der digitalen Straßenkarte (15) entnommen wird.

7. Verfahren nach einem der Ansprüche 1 bis 5, **dadurch gekennzeichnet, dass** als Straßenbreite (b) ein vorgegebener Wert angenommen wird.

8. Verfahren nach einem der Ansprüche 1 bis 7, **dadurch gekennzeichnet, daß** mögliche Abbiegewege (A) zwischen Straßensegmenten ($s_2$ - $s_9$) der digitalen Straßenkarte (15) vorberechnet und in einer Tabelle zwischengespeichert werden, aus welcher dann der jeweils zwischen zwei Straßensegmenten zu berücksichtigende Abbiegeweg (A) entnommen wird.

9. Verfahren nach einem der Ansprüche 1 bis 8, **dadurch gekennzeichnet, daß** ein Abbiegeweg (A) zwischen zwei Straßensegmenten ($s_2$ - $s_9$) nur dann berechnet und berücksichtigt wird, wenn der Winkel ($\alpha$) zwischen diesen einen vorgegebenen Mindestwert übersteigt.

10. Verfahren nach einem der Ansprüche 1 bis 9, **dadurch gekennzeichnet, daß** die Abbiegewege (A) im Verlauf des zurückgelegten Wegs (11, 12) nur dann berechnet und berücksichtigt werden, wenn sie eine vorgegebene Mindestanzahl oder ihre Summe einen vorgegebenen Mindestwert übersteigt.

11. Verfahren nach einem der Ansprüche 1 bis 10, **dadurch gekennzeichnet, daß** zwischen mehr als zwei aufeinanderfolgenden Straßensegmenten ($s_2$ - $s_9$), zwischen denen jeweils annähernd gleich große, jedoch in ihrer Abbiegerichtung abwechselnde Winkel ($\alpha$) liegen, keine Abbiegewege (A) berechnet und berücksichtigt werden.

12. Verfahren nach einem der Ansprüche 1 bis 11, **dadurch gekennzeichnet, daß** die Abbiegewege (A) nur für Straßensegmente ($s_2$ - $s_9$) in bestimmten Gebieten der digitalen Straßenkarte (15), bevorzugt nur in Stadtgebieten, berechnet und berücksichtigt werden.

## Claims

1. Method for determining the length (L) of the route (11, 12) travelled by a vehicle (1) using a position measuring device (13) that records positions (14) of the vehicle (1) and a digital road map (15), which is composed of road segments ($s_2$ - $s_9$) of known segment lengths ($l_2$, $l_3$), with the steps:

   recording positions (14) of the vehicle (1) on the route (11, 12) by means of the position measuring device (13),

matching the recorded vehicle positions (14) to a sequence of road segments ($s_2$ - $s_9$), and determining the route length (L) from the segment lengths ($l_2$, $l_3$) of these road segments ($s_2$ - $s_9$),

**characterised in that**

for at least two consecutive road segments, from the angle ($\alpha$) between at least two consecutive road segments ($s_2$ - $s_9$) and an assumed road width (b) of the two road segments ($s_2$ - $s_9$) the length of the turn-off route (A) of the vehicle (1) from said one road segment into said other road segment is calculated,

by which length of the turn-off route (A) the route length (L) is corrected at its determination.

2. Method according to claim 1, wherein at least one road segment ($s_2$ - $s_9$) of the digital road map (15) represents a road (2 - 9) with at least two lanes (16 - 19), which are assigned to opposing travel directions (20), **characterised in that** in the calculation of the turn-off route (A) to/from this road segment ($s_2$ - $s_9$) the turn-off route (A) to/from the lane (16 - 19) assigned to the direction of travel (20) of the vehicle (1) is calculated.

3. Method according to claim 1 or 2, wherein at least one road segment ($s_2$ - $s_9$) of the digital road map (15) represents a road (21) with at least two lanes (22, 23), of which at least one (23) is assigned to a specific turn-off direction, **characterised in that** in the calculation of the turn-off route to/from this road segment ($s_2$ - $s_9$) the turn-off route (A) to/from the lane (23) assigned to the turn-off direction of the vehicle (1) is calculated.

4. Method according to one of claims 1 to 3, **characterised in that** the turn-off route (A) is calculated as a polygonal line.

5. Method according to one of claims 1 to 3, **characterised in that** the turn-off route (A) is calculated as an arc of a curve.

6. Method according to one of claims 1 to 5, **characterised in that** the said assumed road width (b) is taken from the digital road map (15).

7. Method according to one of claims 1 to 5, **characterised in that** a predetermined value is assumed as the road width (b).

8. Method according to one of claims 1 to 7, **characterised in that** possible turn-off routes (A) between road segments ($s_2$ - $s_9$) of the digital road map (15) are pre-calculated and stored in a table, from which the respective turn-off route (A) to be taken into consideration between two road segments is then taken.

9. Method according to one of claims 1 to 8, **characterised in that** a turn-off route (A) between two road segments ($s_2$ - $s_9$) is only calculated and taken into consideration when the angle ($\alpha$) between these exceeds a predetermined minimum value.

10. Method according to one of claims 1 to 9, **characterised in that** the turn-off routes (A) over the course of the travelled route (11, 12) are only calculated and taken into consideration when their count exceeds a predetermined minimum number or when their sum exceeds a predetermined minimum value.

11. Method according to one of claims 1 to 10, **characterised in that** no turn-off routes (A) are calculated and taken into consideration between more than two consecutive road segments ($s_2$ - $s_9$), between which angles ($\alpha$) lie that are respectively approximately equal, but alternate in their turn-off direction.

12. Method according to one of claims 1 to 11, **characterised in that** the turn-off routes (A) are only calculated and taken into consideration for road segments ($s_2$ - $s_9$) in specific areas of the digital road map (15), preferably only in urban areas.

## Revendications

1. Procédé pour déterminer la longueur (L) du trajet (11, 12) parcouru par un véhicule (1) en utilisant un système de mesure de position (13) qui enregistre des positions (14) du véhicule (1) et une carte routière numérique (15) qui se compose de segments de route ($s_2$-$s_9$) ayant des longueurs de segments ($l_2$, $l_3$) connues, avec les étapes consistant à enregistrer des positions (14) du véhicule (1) sur le trajet (11, 12) au moyen du système de mesure de position (13),

associer des positions enregistrées (14) du véhicule à une succession de segments de route ($s_2$-$s_9$), et déterminer la longueur du trajet (L) à partir des longueurs de segments ($l_2$, $l_3$) de ces segments de route ($s_2$-$s_9$),

**caractérisé en ce que**

pour au moins deux segments de route successifs on calcule à partir de l'angle ($\alpha$) entre deux segments de route successifs ($s_2$-$s_9$) et une largeur de route (b) supposée des deux segments de route ($s_2$-$s_9$), la longueur du trajet de virage (A) du véhicule (1) depuis un segment de route vers l'autre segment de route,

la longueur du trajet (L) est corrigée lors de sa détermination en fonction de la longueur (A) du trajet de virage.

**2.** Procédé selon la revendication 1, dans lequel au moins un segment de route ($s_2$-$s_9$) de la carte routière numérique (15) représente une route (2-9) avec au moins deux voies de circulation (16-19) qui sont associées à des directions de circulation opposées (20), **caractérisé en ce que** lors du calcul du trajet de virage (A) vers/depuis ce segment de route ($s_2$-$s_9$) on calcule le trajet de virage (A) vers/depuis la voie de circulation (16-19) correspondante qui est associée à la direction de circulation (20) du véhicule (1).

**3.** Procédé selon la revendication 1 ou 2, dans lequel au moins un segment de route ($s_2$-$s_9$) de la carte routière numérique (15) représente une route (21) avec au moins deux voies de circulation (22, 23), parmi lesquelles au moins une voie (23) est associée à une direction de virage déterminée, **caractérisé en ce que** lors du calcul du trajet de virage (A) vers/depuis ce segment de route ($s_2$-$s_9$) on calcule le trajet de virage (A) vers/depuis cette voie de circulation (23) qui est associée à la direction de virage du véhicule (1).

**4.** Procédé selon l'une des revendications 1 à 3, **caractérisé en ce que** le trajet de virage (A) est calculé comme un tracé polygonal.

**5.** Procédé selon l'une des revendications 1 à 3, **caractérisé en ce que** le trajet de virage (A) est calculé comme un arc de courbe.

**6.** Procédé selon l'une des revendications 1 à 5, **caractérisé en ce que** la largeur de route supposée précitée (b) est obtenue de la carte routière numérique (15).

**7.** Procédé selon l'une des revendications 1 à 5, **caractérisé en ce que** l'on suppose une valeur prédéterminée à titre de largeur de route (b).

**8.** Procédé selon l'une des revendications 1 à 7, **caractérisé en ce que** l'on calcule au préalable des trajets de virage (A) possibles entre des segments de route ($s_2$-$s_9$) de la carte routière numérique (15), et on les mémorise dans un tableau duquel on prélève alors le trajet de virage (A) à prendre en compte entre deux segments de route.

**9.** Procédé selon l'une des revendications 1 à 8, **caractérisé en ce que** l'on calcule un trajet de virage (A) entre deux segments de route ($s_2$-$s_9$) et on le prend en compte uniquement si l'angle ($\alpha$) entre ces segments dépasse une valeur minimum prédéterminée.

**10.** Procédé selon l'une des revendications 1 à 9, **caractérisé en ce que** les trajets de virage (A) dans le tracé du trajet parcouru (11, 12) sont calculés et pris en compte uniquement s'ils dépassent un nombre minimum prédéterminé ou si leur somme dépasse une valeur minimum prédéterminée.

**11.** Procédé selon l'une des revendications 1 à 10, **caractérisé en ce que** l'on ne calcule pas et on ne prend en compte aucun trajet de virage (A) entre plus de deux segments de route successifs ($s_2$-$s_9$) entre lesquels se présentent des angles ($\alpha$) de valeur approximativement égale mais dont les directions de virage alternent.

**12.** Procédé selon l'une des revendications 1 à 11, **caractérisé en ce que** les trajets de virage (A) sont calculés et pris en compte uniquement pour des segments de route ($s_2$-$s_9$) dans certaines régions de la carte routière numérique (15), de préférence uniquement dans des régions urbaines.

*Fig. 1*

*Fig. 2*

**EP 2 431 712 B1**

**IN DER BESCHREIBUNG AUFGEFÜHRTE DOKUMENTE**

**In der Beschreibung aufgeführte Patentdokumente**

- DE 102006027676 A1
- EP 1471329 A2